**Europäisches Patentamt**

**European Patent Office**

**Office européen des brevets**

(19)

(11) Publication number: **0 108 148**
**B1**

(12) **EUROPEAN PATENT SPECIFICATION**

(45) Date of publication of patent specification: **13.01.88**

(21) Application number: **82901309.3**

(22) Date of filing: **30.04.82**

(86) International application number:
**PCT/JP82/00150**

(87) International publication number:
**WO 83/03785 10.11.83 Gazette 83/26**

(51) Int. Cl.⁴: **B 22 C 25/00, B 22 C 11/10,
B 65 G 25/02**

(54) **A FOUNDRY POURING STATION TABLE.**

(43) Date of publication of application:
**16.05.84 Bulletin 84/20**

(45) Publication of the grant of the patent:
**13.01.88 Bulletin 88/02**

(84) Designated Contracting States:
**DE GB**

(56) References cited:
**JP-A-53 075 116**
**JP-B-55 003 243**
**US-A-3 221 870**
**US-A-4 071 137**

(73) Proprietor: **KOYO CHUKI CO., LTD**
**508-1 Tainoshima Tamukae-machi Kumamoto-shi**
**Kumamoto 862 (JP)**

(73) Proprietor: **OTAKI, Katsuharu**
**5-35 Kotohira 1-chome Kumamoto-shi**
**Kumamoto 860 (JP)**

(72) Inventor: **OTAKI, Katsuharu**
**5-35, Kotohira 1-chome Kumamoto-shi**
**Kumamoto 860 (JP)**

(74) Representative: **Barrett, James William et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to pouring station tables in foundries in which a series of sand molds are sequentially pushed out of a molding machine, which sand molds are brought into contact with each other on the pouring station table, advanced therealong and subjected to a pouring operation, of molten metal, whilst thereon, according to the preamble of claim 1.

In previous pouring station tables on which a series of sand molds are brought into contact with each other and transferred whilst in such contact, a stationary grating table is mounted on a supporting frame, along a travelling path of the sand molds subsequent to a molding machine to receive sand molds prepared in the molding machine. Each prepared sand mold is pushed out of the molding machine on to the stationary grating table and into contact with a preceding sand mold, so that the preceding sand mold is advanced along, or transferred from, the stationary grating table of the pouring station table whilst being subjected to the pouring operation. In order to advance a plurality of sand molds on such a stationary grating table, it is necessary to push the rearmost sand mold with a considerable pushing force. However, the sand mold may well not be able to withstand such a large pushing force. Consequently there is a problem in that sand molds are often broken by the pushing force required to advance the sand molds along the stationary grating table. U.S. 4,071,137, forming the preamble of claim 1, describes apparatus capable of overcoming the aforementioned difficulties, in which sand molds are conveyed on a so-called walking beam conveyor and the movable rails of the conveyor are moved vertically by fluid pressure bearings which also facilitate horizontal movement of the movable rails. Such an arrangement is unnecessarily complicated.

It is an object of the present invention to provide a foundry pouring station table which is simple of construction and operation.

According to the present invention there is provided a foundry pouring station table including a stationary grating table comprising a plurality of stationary rails which are fixedly mounted in spaced apart relationship on a hollow frame to extend parallel to each other along the travelling path of a sand mold, at least one movable rail shorter than said stationary rails and disposed between two adjacent stationary rails, a travelling frame located under said hollow frame so as to be translated in an advancing direction of said sand mold and carrying support means for said movable rail adjustable to locate the upper surface of the movable rail either below or slightly above the upper surface of said adjacent stationary rails, and a driving cylinder for said travelling frame located at a lower position in said hollow frame; characterised in that said travelling frame is supported on rollers for translation in said advancing direction of the said mold upon actuation of said driving cylinder and said support means is a lifting cylinder mounted on an upper surface of said travelling frame.

In order that the invention may be well understood, one embodiment thereof, which is given by way of example only, will now be described, reference being made to the accompanying drawings, in which:

Figure 1 is a plan view of a pouring station table of a preferred embodiment of the present invention;

Figure 2 is a sectional view taken along the line II—II of Figure 1;

Figure 3 is a partial plan view, enlarged relative to Figures 1 and 2, of a pouring station table;

Figure 4 is an enlarged front view of a driving mechanism of a travelling frame of a pouring station table;

Figure 5 is a sectional view taken along the line V—V of Figure 4; and

Figure 6 is a sectional view taken along the line VI—VI of Figure 4.

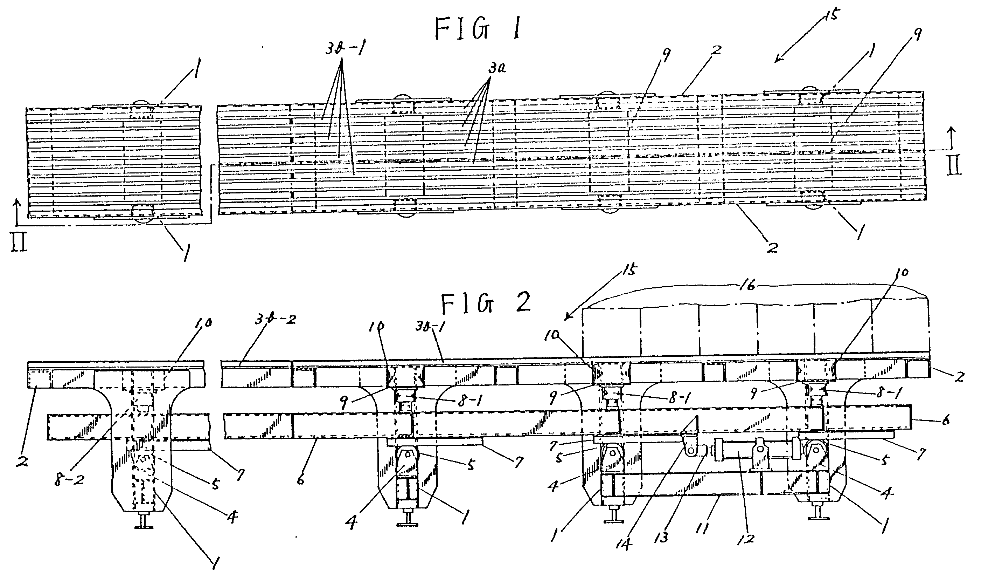

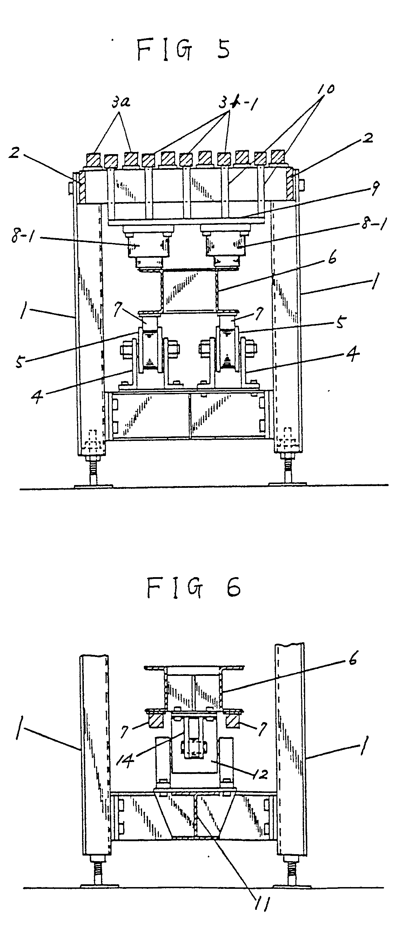

As shown in Figures 1, 2 and 3, a suitable number of vertical supporting frames or legs 1 are installed on a floor of the foundry at suitable intervals along a line extending from left to right in each of Figures 1, 2 and 3. On an upper end portion of each of the supporting frames 1 is fixedly mounted a hollow frame 2 to which a stationary grating table is fixed, which stationary grating table comprises a plurality of stationary rails 3a which are disposed in parallel with each other along the travelling path of a sand mold 16 and spaced apart from each other at predetermined intervals as shown in Figure 1. An upper surface of the stationary rail 3a is higher than the upper surface of the hollow frame 2. Between the stationary rails 3a are disposed a plurality of first movable rails 3b-1 and second movable rails 3b-2, an upper surface of each of which movable rails 3b-1 and 3b-2 is lower than the upper surface of the stationary rails 3a. Each of the first movable rails 3b-1 is aligned in series with a respective second movable rail 3b-2 so as together to correspond in length to each of the stationary rails 3a, and the cross-sectional shape of each of the movable rails 3b-1 and 3b-2 is substantially identical with that of the stationary rail 3a. In a lower inside portion of each of the supporting frames 1 is provided a mounting base on which a pair of bearings 4 are fixedly mounted. A roller 5 is rotatably supported on the bearings 4. Between the supporting frames 1 a travelling frame 6 is provided so as to extend along and beneath the travelling path of the sand mold 16. A short rail 7 is provided on a lower surface of the travelling frame 6 so as to correspond to the roller 5, such that the short rail 7 is brought into contact with the roller 5 as shown in Figure 5. On the upper surface of the travelling frame is located a lifting cylinder 8-1 disposed under the movable rails 3b-1. On an upper surface of the lifting cylinder 8-1 is fixedly mounted a base plate 9 on an upper surface of which leg bases 10 are mounted so as to support one each of the first movable rails 3b-1. Consequently, as shown in Figure 5, these leg bases 10 are installed in parallel with each other so as to correspond to the first movable rails 3b-1. Similarly, another lifting cylinder 8-2 is located on the upper surface of the travelling frame 6 so as to be disposed under the movable rails 3b-2. On an upper surface of the lifting cylinder 8-2 is fixedly mounted a base plate 9 on an upper surface of which leg bases 10 are mounted so as to support one each of the second movable rails 3b-2. Consequently, these leg bases 10 are also installed in parallel with each other, as in the case of the first movable rails 3b-1, so as to correspond to the second movable rails 3b-2.

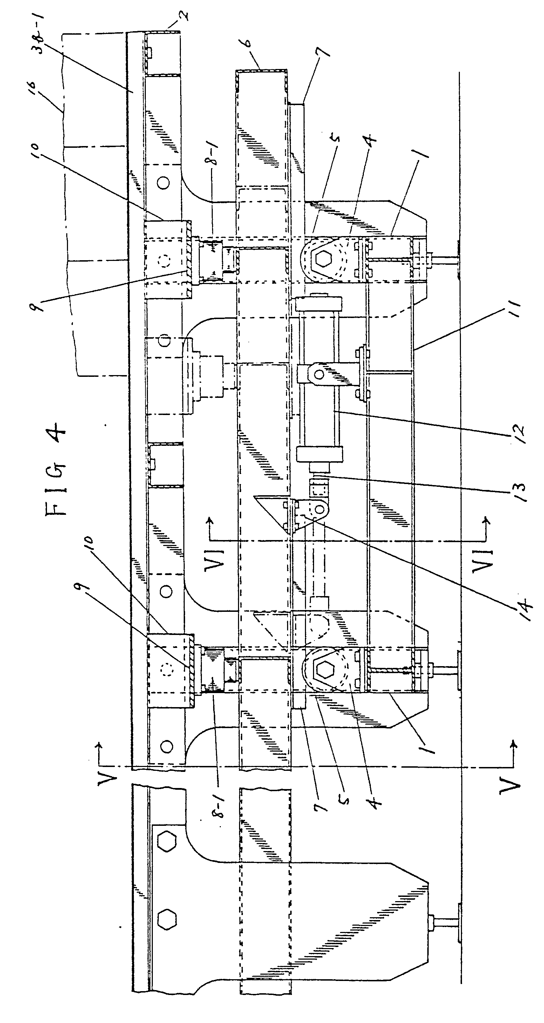

In Figures 4, 5 and 6, there is shown a driving mechanism for the travelling frame 6. As shown in these drawings, a base 11 is provided under the travelling frame 6 so as to extend centrally along the travelling path of the sand mold 16 between longitudinally adjacent supporting frames 1. On an upper surface of the base 11 is mounted a driving cylinder 12 from which a piston rod 13 projects, in an advancing direction of a sand mold 16, a front end portion of which piston rod 13 being connected to a connecting segment 14 which projects from the travelling frame 6.

The action of the pouring station table in operation will now be described with reference to the drawings.

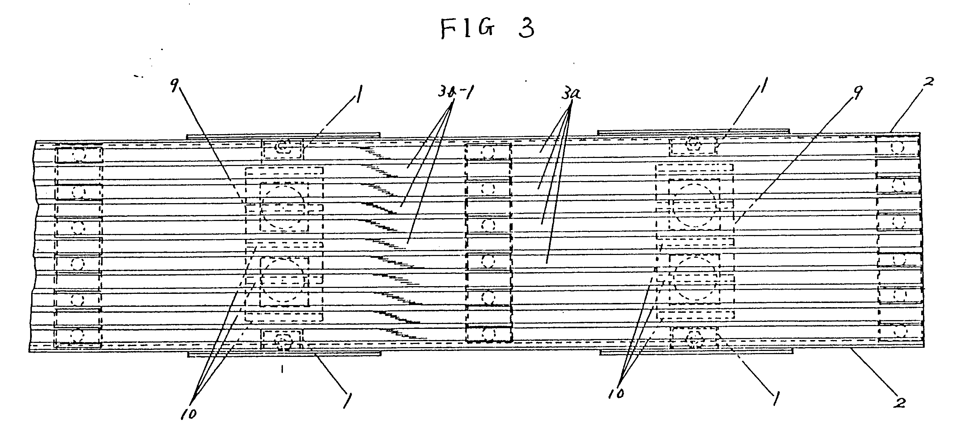

The pouring station table 15 is positioned adjacent a molding station machine, which is positioned to the right of the hollow frame 2 as shown in Figure 2. Each sand mold 16, prepared in the molding station machine, is received on to the upper surfaces of the stationary grating table 3a and, sequentially, first and second movable rails 3b-1 and 3b-2, such that each sand mold 16 is advanced along its travelling path on the pouring station table 15 each time a sand mold 16 is prepared and pushed out of the molding station machine. The sand molds prepared in the molding station machine are thus brought into close contact with each other in series along the pouring station table 15, i.e., on the upper surfaces of the stationary grating table 3a. When a newly prepared sand mold 16 is pushed out of the molding station machine on to the pouring station table 15, the lifting cylinder 8-1 is actuated to lift the first movable rails 3b-1 to a position higher than the upper surface of the stationary grating table 3a so that about 4/5 of the total weight of the sand molds 16 positioned on the pouring station table 15 is supported by the thus lifted first movable rails 3b-1, the remaining 1/5 of the weight being supported by the stationary grating table 3a. Simultaneously, the driving cylinder 12 of the travelling frame 6 is fed with an actuating pressure just below that required to advance the travelling frame 6 along the travelling path of the sand molds 16. Under such circumstances, when a further newly prepared sand mold 16 is pushed out of the molding station machine on to the pouring station table 15, such further sand mold 16 pushes the rearmost sand mold 16 disposed on the pouring station table 15 forward. Such pushing force applied to the rearmost sand mold 16 is in turn applied to the first movable rails 3b-1 through friction therebetween and to the travelling frame 6 through the leg bases 10, the base plates 9 and the lifting cylinders 8-1, while the travelling frame 6 is under the influence of the driving cylinder 12 which has been already energized as described above so that the first movable rails 3b-1 advance, together with the travelling frame 6, by a distance corresponding to the width of a sand mold 16, leftward in Figure 4, under the influence of the energized driving cylinder 12 and piston rod 13. Thus, the sliding friction between the stationary grating table 3a and the sand molds 16 thereon, whilst advancing the sand molds 16 along the pouring station table 15, is reduced. Also, since the rolling friction between the roller 5 and the short rail 7 is small, it is possible to transfer the sand molds 16 by means of the movable rails with a small pushing force. Thus, sand mold failure is prevented and thinner or larger sand molds may be made, for providing larger mold cavities.

After completion of the advance of the sand molds 16 on the pouring station table 15 by the width of a sand mold 16, the lifting cylinder 8-1 is reversely actuated so as to lower the first movable rails 3b-1 to a position lower than the upper surface of the stationary grating table 3a, while the driving cylinder 12 is also reversely actuated so as to retract its piston rod 13, thus returning both the travelling frame 6 and the first movable rails 3b-1 to their initial positions, ready for a next advance operation of the sand molds 16 on the pouring station table 15.

When the area of the pouring station table 15 corresponding to the first movable rails 3b-1 is fully covered by the sequentially advancing sand molds 16, the second movable rails 3b-2, which are held stationary till that time, are lifted by the pushing cylinder 8-2 in synchronization with the lifting motion of the first movable rails 3b-1 by the lifting cylinder 8-1, to continue the sequential pushing operation of the sand molds 16. It is further possible to provide third, fourth, fifth movable rails and so on in addition to these first and second movable rails 3b-1 and 3b-2 in the pouring station table 15 of the present invention. Since the pouring station table 15 of the present invention enables a large number of the sand molds 16 to be transferred under the effect of a small pushing force acting thereon, the energy costs of conducting the pouring operation in the foundry are reduced.

## Claims

1. A foundry pouring station table including a stationary grating table comprising a plurality of stationary rails (3a) which are fixedly mounted in spaced apart relationship on a hollow frame (2) to extend parallel to each other along the travelling path of a sand mold (16), at least one movable rail (3b-1) shorter than said stationary rails (3a) and disposed between two adjacent stationary rails (3a), a travelling frame (6) located under said hollow frame (2) so as to be translated in an advancing direction of said sand mold (16) and carrying support means for said movable rail adjustable to locate the upper surface of the movable rail either below or slightly above the upper surface of said adjacent stationary rails, and a driving cylinder (12) for said travelling frame (6) located at a lower position in said hollow frame; characterised in that said travelling frame (6) is supported on rollers (5) for translation in said advancing direction of the said mold (16) upon actuation of said driving cylinder (12) and said support means is a lifting cylinder (8-1) mounted on an upper surface of said travelling frame (6).

2. A foundry pouring station table as claimed in claim 1, including a plurality of said movable rails (3b-1) each disposed between two adjacent stationary rails (3a).

3. A foundry pouring station table as claimed in claim 2, further including one or more further pluralities of movable rails (3b-2), each plurality being aligned in series with each other plurality.

## Patentansprüche

1. Fülltisch in der Gießstation einer Gießerei mit einem stationären Gittertisch, der mehrerere stationäre Schienen (3a) aufweist, die beabstandet zueinander auf einem Hohlrahmen (2) angeordnet sind und sich parallel zueinander längs des Bewegungsweges einer Sandform (16) erstrecken, mit wenigstens einer beweglichen Schiene (3b-1), die kürzer als die stationären Schienen (3a) ist und zwischen zwei angrenzenden stationären Schienen (3a) angeordnet ist, mit einem Laufrahmen (6), der unter dem Hohlrahmen (2) angeordnet ist und in Vorwärtsbewegungsrichtung der Sandform (16) verschiebbar ist und der eine Trägereinrichtung für die bewegliche Schiene aufweist, die so einstellbar ist, daß die Oberfläche der beweglichen Schiene entweder unterhalb oder leicht oberhalb der oberen Fläche der angrenzenden stationären Schienen liegt, und mit einem Antriebszylinder (12) für den Laufrahmen (6), der in einer unteren Lage in dem Hohlrahmen angeordnet ist, dadurch gekennzeichnet, daß der Laufrahmen (6) auf Rollen (5) zur Bewegung in der Laufrichtung der Form (16) bei Betätigung des Antriebszylinders (12) abgestützt ist und daß die Halteeinrichtung ein Hebezylinder (8-1) ist, der auf einer oberen Fläche des Laufrahmens (6) angeordnet ist.

2. Fülltisch nach Anspruch 1, mit mehreren der genannten beweglichen Schienen (3b-1), die jeweils zwischen zwei angrenzenden stationären Schienen (3a) angeordnet sind.

3. Fülltisch nach Anspruch 2, mit einer oder mehreren weiteren beweglichen Schienenmehrheiten (3b-2), wobei jede Mehrheit in Reihe mit jeder anderen Mehrheit ausgerichtet ist.

## Revendications

1. Table de coulée pour un poste de coulée dans une fonderie, comprenant une table sous forme d'une grille stationnaire constituée de barres ou rails qui sont montés fixes, parallèlement à distance les uns des autres sur un châssis creux (2) le long du trajet de transport d'un moule en sable (16), au moins un rail mobile (3b-1) qui est plus court que les rails stationnaires (3a) et est disposé entre deux rails stationnaires (3a) voisins, un châssis ou longeron mobile (6), disposé sous le châssis creux (2) de manière à pouvoir être animé d'un mouvement de translation dans la direction d'avancement du moule en sable (16), le longeron mobile portant un moyen de support pour le rail mobile, moyen de support qui est manoeuvrable pour positionner la face supérieure du rail mobile sous la face supérieure ou légèrement au-dessus de la face supérieure des rails fixes voisins, ainsi qu'un vérin d'avancement (12) disposé au-dessous du châssis creux et destiné au déplacement du longeron mobile (6), caractérisée en ce que le longeron mobile (6) est supporté sur des galets (5) en vue de sa translation dans la direction d'avancement du moule (16), lors de l'actionnement du vérin d'avancement (12), et que le moyen de support est un vérin de levage (8-1) qui est monté sur le dessus du longeron mobile (6).

2. Table selon la revendication 1, comprenant un jeu de rails mobiles (3b-1) disposés chacun entre deux rails fixes (3a) voisins.

3. Table selon la revendication 2, comprenant, en outre, un ou plusieurs jeux supplémentaires de rails mobiles (3b-2), chaque jeu étant aligné avec un autre jeu à la suite de celui-ci.

## FIG 1

## FIG 2

FIG 3

FIG 4

FIG 5

FIG 6

4